# EUROPEAN PATENT APPLICATION

(11) **EP 4 726 820 A1**
(43) Date of publication of application: **15.04.2026**
(21) Application number: 23944863.2
(22) Date of filing: 18.10.2023
(51) Int. Cl.: H01M 10/04, H01M 10/0587, H01M 10/0525

(54) **WINDING SYSTEM AND WINDING METHOD THEREOF**

(30) Priority: 11.07.2023 CN 202310841090
(71) Applicant: Contemporary Amperex Technology Co., Limited, Ningde, Fujian 352100 (CN)
(72) Inventor: WU, Kai, Ningde, Fujian 352100 (CN); WU, Xiang, Ningde, Fujian 352100 (CN); ZHANG, Xiaowei, Ningde, Fujian 352100 (CN); GUO, Xin, Ningde, Fujian 352100 (CN); WEN, Yuqian, Ningde, Fujian 352100 (CN); TANG, Minghao, Ningde, Fujian 352100 (CN); ZHANG, Shengwu, Ningde, Fujian 352100 (CN)
(74) Representative: Kraus & Lederer PartGmbB
(86) International application number: PCT/CN2023/125277
(87) International publication number: WO 2025/010857

(57) **Abstract**

This application relates to the field of battery processing technologies, and particularly discloses a winding system and a winding method thereof. The winding system includes an electrode plate unwinding mechanism, a separator unwinding mechanism, a winding mandrel, a cutter, and an auxiliary wheel mechanism. The electrode plate unwinding mechanism is configured to unwind an electrode plate, and the separator unwinding mechanism is configured to unwind a separator; the winding mandrel is configured to wind the electrode plate and the separator to form a winding core; the cutter is configured to cut the electrode plate and is arranged upstream of the winding mandrel; the auxiliary wheel mechanism is arranged downstream of the cutter, where the auxiliary wheel mechanism includes an auxiliary wheel, a first drive member, and a second drive member, the first drive member is configured to drive the auxiliary wheel to move closer to or away from the electrode plate, and the second drive member is configured to drive the auxiliary wheel to rotate to adjust the tension of the electrode plate.

## Description

### RELATED APPLICATIONS

This application claims priority to Chinese Patent Application No. 202310841090.6, filed on July 11, 2023, which is incorporated herein by reference in its entirety.

### TECHNICAL FIELD

This application relates to the field of battery manufacturing technology, and in particular, to a winding system and a winding method thereof.

### BACKGROUND

In the manufacturing process of cylindrical lithium batteries or prismatic lithium batteries, winding of the battery cell is one of the critical steps, and the winding quality of the battery cell affects the safety and service life of the lithium battery.

In the related art, a winding mandrel is generally used to wind the battery cell. During the winding process, due to the high electrode plate tension at the initial stage, the interlayer gap of the winding core is small. At the later stage, after cutting, there is no tension, resulting in a larger interlayer gap in the winding core, which affects the usage performance of the winding core.

### SUMMARY

A main objective of this application is to provide a winding system intended to adjust the tension of the electrode plate to improve the performance of the winding core.

To achieve the above objective, the winding system proposed by this application includes:
an electrode plate unwinding mechanism configured to unwind an electrode plate;
a separator unwinding mechanism configured to unwind a separator;
a winding mandrel configured to wind the electrode plate and the separator to form a winding core;
a cutter configured to cut the electrode plate, the cutter being arranged upstream of the winding mandrel; and
an auxiliary wheel mechanism arranged downstream of the cutter, where the auxiliary wheel mechanism includes an auxiliary wheel, a first drive member, and a second drive member, the first drive member is configured to drive the auxiliary wheel to move closer to or away from the electrode plate, and the second drive member is configured to drive the auxiliary wheel to rotate to adjust the tension of the electrode plate.

In the winding system of this application, during the winding process, an auxiliary wheel mechanism is disposed on the side of the electrode plate, the auxiliary wheel of the auxiliary wheel mechanism presses against the electrode plate and, driven by the second drive member, can actively rotate relative to the electrode plate to adjust the tension of the electrode plate, thereby controlling the interlayer gaps of the winding core to improve the performance of the winding core. The auxiliary wheel is arranged downstream of the cutter, enabling tension adjustment throughout the entire winding cycle of the electrode plate, and is not too far from the winding mandrel, thereby enhancing the adjustment effect on the tension of the electrode plate. For example, the auxiliary wheel may be disposed on two sides of each electrode plate to actively drive the electrode plate in the conveying direction to reduce the tension during entry into winding; or it may press against the periphery of the winding core formed by winding and rotate relative to the electrode plate to adjust the tension of the electrode plate during entry into winding.

In an embodiment of this application, the auxiliary wheel is disposed on one side of the winding mandrel. The auxiliary wheel is configured to press against the outer side of the winding core, and the second drive member is configured to drive the auxiliary wheel to rotate in a direction opposite to a winding direction of the winding mandrel to adjust the tension of the electrode plate.

The auxiliary wheel presses against the periphery of the winding core formed by winding and rotates relative to the electrode plate. By setting the rotation direction and pressing force of the auxiliary wheel, at the initial stage of winding, the auxiliary wheel can rotate in a direction opposite to the winding direction to interrupt the tension of the electrode plate, reducing the pulling and pressing on the electrode plate and the separator by the tension, thereby increasing the interlayer gaps between the inner turns; whereas at the later stage of winding, pressure applied to the winding core serves to compact the electrode plate or separator in the outer turns and to shorten the length of a free tail segment after cutting, thereby reducing the winding gap of the outer turns, mitigating the difference in interlayer gaps between the inner and outer turns, and improving the performance of the winding core.

In an embodiment of this application, the axial length of the auxiliary wheel is greater than or equal to the axial length of the winding mandrel.

The axial length of the auxiliary wheel can be set to enable complete pressing against the winding core, thereby improving the uniformity of tension relief for the electrode plate at various positions of the winding core.

In an embodiment of this application, the outer peripheral surface of the auxiliary wheel is made of a flexible material.

The use of a flexible material can reduce the surface hardness of the auxiliary wheel, thereby protecting the winding core.

In an embodiment of this application, the auxiliary wheel is disposed at a position at which the electrode plate is wound onto the winding mandrel.

Here, disposing the auxiliary wheel at the position at which the electrode plate is first wound onto the winding mandrel can improve the efficiency and likelihood of adjustment on the tension of the electrode plate.

In an embodiment of this application, the auxiliary wheel mechanism further includes a pressure sensor, the pressure sensor being disposed on the auxiliary wheel and electrically connected to the first drive member;
and/or, the auxiliary wheel mechanism further includes a displacement sensor, the displacement sensor being disposed on one side of the auxiliary wheel and electrically connected to the first drive member.

Here, the pressure sensor can be provided to detect the pressure applied to the winding core or electrode plate, thereby more precisely controlling the drive of the first drive member to enhance the effect of adjusting the interlayer gap of the winding core.

With the displacement sensor, it is also possible to further coordinately control the second drive member, improving the precision and efficiency of the auxiliary wheel drive.

In an embodiment of this application, at least two auxiliary wheel mechanisms are provided, the at least two auxiliary wheel mechanisms being spaced apart on the periphery of the winding core.

Increasing the number of auxiliary wheel mechanisms can further enhance the adjustment effect on the tension of the electrode plate, further reducing the difference in interlayer gaps between the inner and outer turns.

In an embodiment of this application, two auxiliary wheel mechanisms are provided, the two auxiliary wheel mechanisms being symmetrically disposed on the periphery of the winding core.

The provision of two auxiliary wheel mechanisms provides a simple structure, and the other auxiliary wheel can compensate for the auxiliary wheel that mainly improves the tension, further improving the winding effect.

In an embodiment of this application, the auxiliary wheel mechanism includes at least two auxiliary wheels, two of the auxiliary wheels sandwiching the electrode plate, and the second drive member being configured to drive at least one of the two auxiliary wheels to rotate in a same direction as a feeding direction of the electrode plate.

Here, driven by the second drive member, the auxiliary wheel can actively rotate relative to the electrode plate, imparting a specific conveying speed to the electrode plate to match the winding speed, thereby adjusting the tension of the electrode plate.

In an embodiment of this application, the two auxiliary wheels are configured to simultaneously sandwich two electrode plates and two separators, and the second drive member is configured to drive at least one of the two auxiliary wheels to rotate in a same direction as a feeding direction of the electrode plate.

Two separators and two electrode plates are first pre-pressed and laminated to form a laminated assembly, then the auxiliary wheel is driven to actively rotate relative to the laminated assembly. This can further reduce the initial tension of the electrode plates and provide a specific clamping force after the electrode plate is cut, improving the winding effect of the winding core.

In an embodiment of this application, the first drive member drives the auxiliary wheel to move in a direction perpendicular to the feeding direction of the electrode plate; where a point at which the electrode plate contacts the periphery of the winding core is set as a tangent point, and a line connecting the tangent point and a center of the winding mandrel is perpendicular to a surface of the electrode plate.

Through the cooperation of the two auxiliary wheel mechanisms, the pressure applied to the winding core due to the angle between the electrode plate and/or separator and the winding entry point of the winding mandrel can be reduced, thereby further relieving the tension of the electrode plate, increasing the interlayer gaps between the inner turns, and providing a specific clamping force after the electrode plate is cut. This thus reduces the lengths of the free head and tail segments, reducing the interlayer gaps between the outer turns, and mitigating the issues of poor tail suspension of the winding core.

This application also provides a winding method of a winding system, where the winding system includes an electrode plate unwinding mechanism, a separator unwinding mechanism, a winding mandrel, a cutter, and an auxiliary wheel mechanism, the auxiliary wheel mechanism includes an auxiliary wheel, a first drive member, and a second drive member, and the winding method including the steps:
controlling the electrode plate unwinding mechanism to release the electrode plate, and controlling the separator unwinding mechanism to release the separator;
controlling the winding mandrel to rotate in a first direction to wind the electrode plate and the separator; and
controlling the first drive member to drive the auxiliary wheel to move closer to or away from the electrode plate, and controlling the second drive member to drive the auxiliary wheel to rotate to adjust the tension of the electrode plate.

In the winding method of this application, the auxiliary wheel of the auxiliary wheel mechanism disposed on the side of the electrode plate presses against the electrode plate during the winding process and, when being driven by the second drive member, can actively rotate relative to the electrode plate to adjust the tension of the electrode plate, thereby controlling the interlayer gaps of the winding core to improve the performance of the winding core.

In an embodiment of this application, the auxiliary wheel is disposed on one side of the winding mandrel and configured to press against an outer side of the winding core, and in the step of controlling the first drive member to drive the auxiliary wheel to move closer to or away from the electrode plate, and controlling the second drive member to drive the auxiliary wheel to rotate to adjust the tension of the electrode plate, the method includes:
controlling the second drive member to drive the auxiliary wheel to rotate in a direction opposite to the first direction, and causing the auxiliary wheel to press against the periphery of the winding core to adjust the tension of the electrode plate.

The auxiliary wheel of the auxiliary wheel mechanism is controlled to press against the outer side of the winding core, and when being driven, can actively rotate relative to the winding core. By setting the rotation speed and pressing force of the auxiliary wheel, at the initial stage of winding, the auxiliary wheel can rotate in a direction opposite to the feeding direction to interrupt the tension of the electrode plate, reducing the pulling and pressing of the winding mandrel on the electrode plate, thereby increasing the interlayer gaps between the inner turns, whereas at the later stage of winding, increased pressing force applied to the winding core serves to compact the electrode plate and separator in the outer turns and to shorten the length of the free tail segment after the electrode plate is cut, thereby reducing the winding gap of the outer turns, mitigating the difference in interlayer gaps between the inner and outer turns, and improving the performance of the winding core.

In an embodiment of this application, in the step of controlling the second drive member to drive the auxiliary wheel to rotate in a direction opposite to the first direction, and causing the auxiliary wheel to press against the periphery of the winding core to adjust the tension of the electrode plate, the method includes:
detecting the number of winding turns of the winding core; and
determining that the winding core has wound a first preset number of turns, and controlling the first drive member to drive the auxiliary wheel to adhere to the surface of the winding core with a first preset pressure, with a rotation speed of the auxiliary wheel being consistent with a winding speed of the winding mandrel.

Here, by detecting the number of winding turns, it is more convenient to control the rotation speed and displacement position of the second drive member. When the first preset number of turns is small, corresponding to the inner turn structure, adhering to the surface of the winding core with a small first preset pressure and rotating in the opposite direction at the same speed as the winding speed can reduce the pulling force on the electrode plate, achieving the effect of increasing the interlayer gaps between the inner turns.

In an embodiment of this application, after the step of determining that the winding core has wound a first preset number of turns, and controlling the first drive member to drive the auxiliary wheel to adhere to the surface of the winding core with a first preset pressure, with a rotation speed of the auxiliary wheel being consistent with a winding speed of the winding mandrel, the method further includes:
determining that the winding core has wound a second preset number of turns, and controlling the first drive member to drive the auxiliary wheel to press against the periphery of the winding core with a second preset pressure;
where the second preset number of turns is greater than the first preset number of turns, and the second preset pressure is greater than the first preset pressure.

When the second preset number of turns is larger, such as during the final winding stage, the second drive member is controlled to press against the winding core with a larger second preset pressure, thereby reducing the interlayer gaps between the outer turns of the winding core.

In an embodiment of this application, the first preset number of turns is 1/3 to 1/2 turn, and the second preset number of turns is the final 1/3 to 1/2 turn before completion.

Intervening at this range of turns can further relieve the tension of the electrode plate in the inner turns, further increasing the interlayer gaps between the inner turns. When pressing is performed with increased pressure in the final 1/3 to 1/2 turn before completion, deformation of the winding core can be avoided, and the interlayer gaps between the outer turns can be effectively reduced, further mitigating the difference in interlayer gaps between the inner and outer turns.

In an embodiment of this application, in the step of determining that the winding core has wound a second preset number of turns, and controlling the first drive member to drive the auxiliary wheel to press against the periphery of the winding core with a second preset pressure, the method includes:
controlling the first drive member to drive the auxiliary wheel to move at a preset speed, such that a pressure pressing against the periphery of the winding core gradually increases from zero to the second preset pressure.

Here, gradually increasing the pressure with which the auxiliary wheel pressing against the winding core can make the winding process of the winding core more stable, avoiding offset and deformation.

In an embodiment of this application, at least two auxiliary wheel mechanisms are provided, and in the step of controlling the first drive member to drive the auxiliary wheel to move closer to or away from the electrode plate, and controlling the second drive member to drive the auxiliary wheel to rotate to adjust the tension of the electrode plate, the method includes:
controlling the two auxiliary wheel mechanisms to symmetrically adhere to the surface of the winding core;
setting an auxiliary wheel near a position at which the electrode plate contacts the winding core as a first auxiliary wheel and another auxiliary wheel farther from the position at which the electrode plate contacts the winding core as the second auxiliary wheel, and controlling the second auxiliary wheel to rotate in a direction opposite to a rotation direction of the first auxiliary wheel.

The provision of two auxiliary wheel mechanisms can enhance the stability of pressing against the winding core, effectively preventing deformation of the winding core. In addition, the reverse rotation of the second auxiliary wheel can offset some redundant wrinkling of the electrode plate on the side in contact with the winding core, improving the winding effect.

In an embodiment of this application, the winding system further includes two pressure sensors, the two pressure sensors being disposed on the two auxiliary wheels.

In the step of setting an auxiliary wheel near a position at which the electrode plate is wound onto the winding core as the first auxiliary wheel and another one as the second auxiliary wheel, and controlling the second auxiliary wheel to rotate in a direction opposite to the rotation direction of the first auxiliary wheel, the method includes:
receiving measurement results from the two pressure sensors; and
determining that a pressure value on the surface of the second auxiliary wheel exceeds a preset threshold, and controlling the first drive member to drive the first auxiliary wheel to move away from the winding core.

Here, the provision of the pressure sensors can effectively reduce deformation of the winding core.

In an embodiment of this application, the winding system further includes a displacement sensor, the displacement sensor being disposed on one side of the first auxiliary wheel; and
in the step of determining that a pressure value on a surface of the second auxiliary wheel exceeds a preset threshold, and controlling the first drive member to drive the first auxiliary wheel to move away from the winding core, the method includes:
obtaining a difference between the pressure value on the surface of the second auxiliary wheel and the preset threshold, and determining a moving displacement amount of the first auxiliary wheel;
controlling the displacement sensor to detect a moving distance of the first auxiliary wheel; and
determining that the moving distance reaches the moving displacement amount, and controlling the first drive member to stop driving the first auxiliary wheel.

Here, the displacement sensor can be provided to enable closed-loop control with the second drive member, improving the control precision of the second drive member and enhancing winding efficiency.

In an embodiment of this application, at least two auxiliary wheels are provided, the two auxiliary wheels being configured to sandwich the electrode plate, and in the step of controlling the first drive member to drive the auxiliary wheel to move closer to or away from the electrode plate, and controlling the second drive member to drive the auxiliary wheel to rotate to adjust the tension of the electrode plate, the method includes:
controlling the second drive member to drive the two auxiliary wheels to rotate in a same direction as a feeding direction of the electrode plate to adjust the tension of the electrode plate.

For battery cells with longer widths and thicker electrode plates, sandwiching the electrode plate with the auxiliary wheels and actively driving the electrode plate before winding can reduce the pulling force of the winding mandrel, further enhancing the tension adjustment effect.

In an embodiment of this application, two auxiliary wheels are configured to simultaneously sandwich two electrode plates and two separators, and in the step of controlling the second drive member to drive the two auxiliary wheels to rotate in a same direction as a feeding direction of the electrode plate to adjust the tension of the electrode plate, the method includes:
controlling the second drive member to drive the two auxiliary wheels to rotate in the same direction as the feeding direction of the electrode plate and/or separator, with a rotation speed of the auxiliary wheels being the same as a winding speed of the winding mandrel.

Here, the auxiliary wheels are used to pre-laminate the electrode plate and separator, and then actively rotate relative to the laminated assembly, simplifying the structure and achieving simultaneous adjustment of the two electrode plates and/or two separators, improving adjustment efficiency and consistency.

In an embodiment of this application, a point where the electrode plate and the separator contact the periphery of the winding core is set as a tangent point, and after the step of controlling the second drive member to drive the two auxiliary wheels to rotate in the same direction as the feeding direction of the electrode plate and/or separator, with a rotation speed of the auxiliary wheels being the same as a winding speed of the winding mandrel, the method includes:
controlling the first drive member to drive the auxiliary wheel to move closer to or away from the electrode plate and separator, such that a line connecting a tangent point and a center of the winding core is perpendicular to the surface of the electrode plate and the separator.

Here, the electrode plate and the separator are first sandwiched by two clamping members to form a laminated assembly, and changing the angle formed by the position where the laminated assembly contacts the periphery of the winding core can reduce the cutting pressure on the surface of the winding core caused by the tension of the electrode plate or separator, thereby facilitating the adjustment of the interlayer gaps between the inner turns and reducing the difference in interlayer gaps of the winding core.

### DESCRIPTION OF DRAWINGS

To describe the technical solutions in embodiments of this application or in the prior art more clearly, the following briefly describes the accompanying drawings required for describing the embodiments or the prior art. Apparently, the accompanying drawings in the following description show only some embodiments of this application, and persons of ordinary skill in the art may still derive other drawings from structures shown in these accompanying drawings without creative efforts.
FIG. 1 is a schematic structural diagram of a first embodiment of a winding system of this application;
FIG. 2 is a schematic diagram of a control circuit of an auxiliary wheel mechanism in the winding system shown in FIG. 1;
FIG. 3 is a schematic structural diagram of a second embodiment of a winding system of this application;
FIG. 4 is a schematic structural diagram of a third embodiment of a winding system of this application;
FIG. 5 is a schematic structural diagram of a fourth embodiment of a winding system of this application;
FIG. 6 is a schematic structural diagram of a fifth embodiment of a winding system of this application;
FIG. 7 is a flowchart of an embodiment of a winding method of a winding system of this application;
FIG. 8 is a flowchart of another embodiment of a winding method of the winding system of this application;
FIG. 9 is a detailed flowchart of step S31 in the winding method of the winding system shown in FIG. 8;
FIG. 10 is a flowchart of yet another embodiment of a winding method of a winding system of this application;
FIG. 11 is a detailed flowchart of step S332 in the winding method of the winding system shown in FIG. 10; and
FIG. 12 is a flowchart of yet another embodiment of a winding method of a winding system of this application.

### Description of reference signs:

| Reference Sign | Name | Reference Sign | Name |
|---|---|---|---|
| 100 | winding system | 41 | auxiliary wheel |
| 11 | electrode plate | 42 | second drive member |
| 12 | laminated assembly | 43 | first drive member |
| 13 | separator | 44 | pressure sensor |
| 20 | winding mandrel | 45 | displacement sensor |
| 30 | winding core | 50 | cutter |
| 40 | auxiliary wheel mechanism | 60 | deviation correction roller |

The realization, functional characteristics, and advantages of the purpose of this application will be further described in conjunction with the embodiments and with reference to the accompanying drawings.

### DESCRIPTION OF EMBODIMENTS

The following clearly and completely describes the technical solutions in embodiments of this application with reference to the accompanying drawings in the embodiments of this application. Apparently, the described embodiments are only some rather than all of the embodiments of this application. Based on the embodiments in this application, all other embodiments obtained by those of ordinary skill in the art without creative effort fall within the protection scope of this application.

It should be noted that all directional indications (such as up, down, left, right, front, and back) in the embodiments of this application are only configured to explain the relative positional relationship, motion conditions, and the like between components in a specific posture (as shown in the drawings). If the specific posture changes, the directional indications change accordingly.

In this application, unless otherwise expressly specified and limited, terms such as "connected" and "fixed" should be understood broadly. For example, "fixed" can be a fixed connection, a detachable connection, or an integral connection; it can be a mechanical connection or an electrical connection; it can be a direct connection or an indirect connection through an intermediate medium, or it can be the internal communication or interaction relationship of two components, unless otherwise expressly limited. For those of ordinary skill in the art, the specific meanings of the above terms in this application can be understood according to specific circumstances.

In addition, descriptions involving "first," "second," or the like in this application are only configured for descriptive purposes and should not be understood as indicating or implying their relative importance or implicitly indicating the number of technical features indicated. Thus, features defined as "first" or "second" may explicitly or implicitly include at least one such feature. In addition, the meaning of "and/or" appearing throughout the text includes three parallel schemes. Taking "A and/or B" as an example, it includes the scheme of A, the scheme of B, or the scheme where both A and B are satisfied. In addition, technical solutions between various embodiments can be combined with each other, but it must be based on the premise that those of ordinary skill in the art can realize it. When the combination of technical solutions results in contradictions or cannot be realized, such a combination of technical solutions should be considered non-existent and not within the protection scope required by this application.

Batteries mentioned in the art can be divided into disposable batteries and rechargeable batteries based on whether they are rechargeable. The common types of rechargeable batteries currently include lead-acid batteries, nickel-metal hydride batteries, and lithium-ion batteries. Lithium-ion batteries are widely configured for pure electric vehicles and hybrid vehicles. Lithium-ion batteries configured for such uses have relatively lower capacity but have larger output, charging current, and longer service life, but their cost is higher.

The battery described in the embodiments of this application refers to a rechargeable battery. The embodiments disclosed in this application will be mainly described with lithium-ion batteries as an example. It should be understood that the embodiments disclosed in this application are applicable to any other appropriate type of rechargeable battery. The batteries mentioned in the embodiments disclosed in this application can be directly or indirectly configured in appropriate devices to power the devices.

The battery mentioned in the embodiments disclosed in this application refers to a single physical module including one or more battery cells to provide a predetermined voltage and capacity. A battery cell is the basic unit in a battery, and a battery cell includes a positive electrode plate, a negative electrode plate, an electrolyte, and a separator. Lithium-ion battery cells mainly rely on the movement of lithium ions between the positive electrode plate and the negative electrode plate to function. Generally, based on the packaging method, they can be divided into cylindrical battery cells, prismatic battery cells, and pouch battery cells. The following will mainly focus on prismatic battery cells. It should be understood that the embodiments described below are, in some aspects, also applicable to cylindrical battery cells or pouch battery cells.

The development of battery technology must simultaneously consider multiple design factors, such as energy density, cycle life, discharge capacity, charge-discharge rate, and other performance parameters. In addition, the production cost and processing technology of the battery need to be considered to improve the quality and production efficiency of the battery.

In the battery manufacturing process, a battery often needs to go through many processes and stations to complete production and measurement to form a complete battery. Winding is an essential and particularly important process in the manufacturing process of lithium-ion batteries. The specific method is to fix the laser-cut electrode plate onto the winding mandrel and rotate with the winding mandrel to wind the separator, positive electrode plate, separator, and negative electrode plate into a multi-layer winding core; then proceed with processes such as casing, welding, and formation.

In the related art, more improvements in winding focus on the axial deviation of the electrode plate or separator or the handling of the tail end after the electrode plate or separator is cut. Here, it is found that when the electrode plate and separator of the lithium battery pass through the pressure roller, the pressure roller generates friction on the electrode plate and separator, forming tension on the wound separator and electrode plate during cell winding, and as the winding pressure accumulates, the gaps between the inner turns of the winding material become very small. After cutting, the tail end of the winding core loses the effect of tension in the outer turns, resulting in larger gaps between the outer turns of the winding material. Thus, there is a significant difference in the interlayer gaps between the inner and outer turns. An excessively small interlayer gap results in insufficient release of swelling stress within the cell, potentially causing the collapse of the central hole of the inner turns. Conversely, an excessively large interlayer gap lengthens the lithium-ion migration path, leading to lithium precipitation on the surface of the electrode plate, thus affecting the cycling performance of the battery.

However, some structures use the separator of special material to address the issue of excessively small interlayer gaps between the inner turns, but this introduces another issue of excessively large gaps between the outer turns, leading to lithium precipitation and purple spots in the outer turns. Some structures press the tail-end winding material with an auxiliary structure, but this cannot address the issue of excessively small interlayer gaps between the inner turns.

Therefore, to address the issues in the related art, this application proposes a winding system in which an auxiliary structure is provided on one side of the electrode plate, and an auxiliary mechanism autonomously drives rotation to relieve the tension of the inner electrode plate and applies pressure to press against the electrode plate, reducing the interlayer gap of the outer electrode plate, thereby effectively improving the consistency of the interlayer gaps at various positions of the winding core.

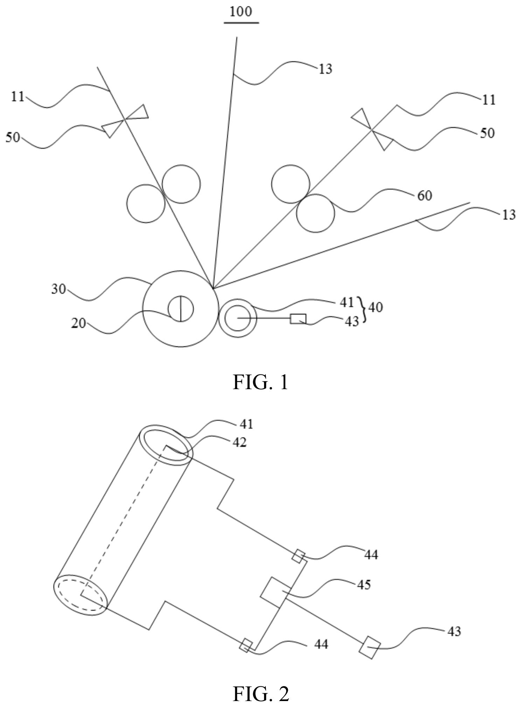

Referring to FIG. 1 to FIG. 5, this application proposes a winding system 100. The winding system 100 includes an electrode plate unwinding mechanism, a separator unwinding mechanism, a winding mandrel 20, a cutter 50, and an auxiliary wheel mechanism 40. The electrode plate unwinding mechanism is configured to unwind an electrode plate 11; the separator unwinding mechanism is configured to unwind a separator 13; the winding mandrel 20 is provided rotatable in a first direction to wind the electrode plate 11 and the separator 13 to form a winding core 30; the cutter 50 is configured to cut the electrode plate 11 and is arranged upstream of the winding mandrel 20; the auxiliary wheel mechanism 40 is arranged downstream of the cutter 50 and includes an auxiliary wheel 41, a first drive member 43, and a second drive member 42, where the first drive member 43 is configured to drive the auxiliary wheel 41 to move closer to or away from the electrode plate 11, and the second drive member 42 is configured to drive the auxiliary wheel 41 to rotate to adjust the tension of the electrode plate 11.

The electrode plate unwinding mechanism includes a positive electrode plate unwinding mechanism and a negative electrode plate unwinding mechanism, and the separator unwinding mechanism includes an upper separator unwinding mechanism and a lower separator unwinding mechanism, each of which is mounted on one side of the winding mandrel 20 via a reel. The type and size of the electrode plate unwinding mechanism and the separator unwinding mechanism are selected based on actual situations, and the material of the electrode plate 11 unwound by each unwinding mechanism may also be selected based on the required performance of the winding core 30, which is not limited herein. In an optional example, during the process of winding the electrode plate 11 and the separator 13 onto the winding mandrel 20, structures such as a deviation correction roller 60 may be used to adjust the winding position accuracy of the electrode plate 11 and the separator 13, which is not described in detail herein. A cutter 50 is also disposed between the electrode plate unwinding mechanism and the winding mandrel 20 to perform cutting after the required winding length is achieved. The winding mandrel 20 may be a hollow structure or a solid structure, which is not limited herein. The cross-sectional shape of the winding mandrel 20 may be circular or elliptical, and the outer peripheral surface of the winding mandrel 20 is the winding surface. When the electrode plate 11 and the separator 13 are wound onto the winding surface of the winding mandrel 20, the structure on the outer periphery of the winding mandrel 20 is the winding core 30. The winding core 30 after winding has inner turns and outer turns, with the inner turns being the first few turns of the electrode plate 11 and the separator 13 just wound onto the winding mandrel 20, and the outer turns being the outermost few layers of the electrode plate 11 and the separator 13. In another example, the winding system 100 further includes a frame to fix the relative positions of multiple unwinding reels and the winding mandrel 20, thereby improving the stability and winding accuracy of the entire structure.

The auxiliary wheel mechanism 40 includes an auxiliary wheel 41, a first drive member 43, and a second drive member 42. The cross-sectional shape of the auxiliary wheel 41 may be circular, elliptical, or the like. The first drive member 43 may be a motor or a pneumatic cylinder to drive the auxiliary wheel 41 to move linearly, and the second drive member 42 may be a motor or a motor to drive the auxiliary wheel 41 to rotate. In one example, the first drive member 43 is drivingly connected to the second drive member 42 to move the auxiliary wheel 41. In other examples, the winding mandrel 20 may be movably arranged to gradually move away from the auxiliary wheel 41 as the diameter increases. The second drive member 42 drives the auxiliary wheel 41 to rotate, and the rotation direction is opposite to the winding direction of the winding mandrel 20, meaning that a rotation direction of the auxiliary wheel 41 on a side in contact with the winding core 30 is opposite to a rotation direction of the winding core 30 on that side, or the rotation direction is the same as the feeding direction of the electrode plate 11, thereby increasing or decreasing the tension of the electrode plate 11 by controlling the rotation speed and pressing force of the auxiliary wheel 41, and thus adjusting the interlayer gaps between two adjacent electrode plates in the winding core 30.

In the winding system 100 of this application, during the winding process of the winding core 30, an auxiliary wheel mechanism 40 is disposed on a side of the electrode plate 11. The auxiliary wheel 41 of the auxiliary wheel mechanism 40 presses against the periphery of the electrode plate 11 and, when being driven, can actively rotate relative to the winding core 30 to adjust the tension of the electrode plate 11, thereby controlling the interlayer gaps of the winding core 30 to improve the performance of the winding core 30. The auxiliary wheel 41 is arranged downstream of the cutter 50 and upstream of the winding mandrel 20, enabling tension adjustment throughout the entire winding cycle of the electrode plate 11, and is not too far from the winding mandrel 20, thereby enhancing the adjustment effect on the tension of the electrode plate 11. For example, the auxiliary wheel 41 may be disposed on two sides of each electrode plate 11 to actively drive the electrode plate 11 in the conveying direction to reduce the tension during entry into winding; or it may press against the periphery of the winding core 30 formed by winding and rotate relative to the electrode plate 11 to adjust the tension of the electrode plate 11 during entry into winding.

Referring to FIG. 1 and FIG. 2, in an embodiment of this application, the auxiliary wheel 41 is disposed on one side of the winding mandrel 20. The auxiliary wheel 41 is configured to press against the outer side of the winding core 30, and the second drive member 42 is configured to drive the auxiliary wheel 41 to rotate in a direction opposite to a winding direction of the winding mandrel 20 to adjust the tension of the electrode plate 11.

The auxiliary wheel 41 presses against the periphery of the winding core 30 formed by winding and actively rotates relative to the winding core 30. By setting the rotation speed and pressing force of the auxiliary wheel 41, at the initial stage of winding, the auxiliary wheel can rotate in a direction opposite to the winding direction to interrupt the tension of the electrode plate 11, reducing the pulling and pressing of the winding force on the electrode plate 11, thereby increasing the interlayer gaps between the inner turns, whereas at the later stage of winding, pressure applied to the winding core 30 serves to compact the electrode plate 11 and the separator 13 in the outer turns and to shorten the lengths of the free tail segments after the electrode plate 11 and the separator 13 are cut, thereby reducing the winding gap of the outer turns and mitigating the difference in interlayer gaps between the inner and outer turns. This thus mitigates the issues of collapse in inner turns and lithium precipitation in outer turns, improving the performance of the winding core 30.

In an embodiment of this application, the axial length of the auxiliary wheel 41 is greater than or equal to the axial length of the winding mandrel 20.

Optionally, the axial length of the auxiliary wheel 41 is greater than or equal to the axial length of the winding mandrel 20, so that the auxiliary wheel 41 enables complete pressing against the winding core 30 in the axial direction, improving the uniformity of tension relief for the electrode plate 11 and the separator 13 at various positions of the winding core 30. Optionally, the middle of the auxiliary wheel 41 in the axial direction corresponds to the middle of the winding mandrel 20 in the axial direction, making the pressing force on the winding core 30 more uniform, further improving the consistency of the interlayer gaps at various positions of the winding core 30. In other embodiments, the axial length of the auxiliary wheel 41 may be set to be less than the axial length of the winding mandrel 20, with the middle of the auxiliary wheel 41 in the axial direction corresponding to the middle of the winding mandrel 20 in the axial direction. In one example, if the length of the winding mandrel 20 is 50 nm to 400 nm, the axial length of the auxiliary wheel 41 is also selected within the above range.

Optionally, when the cross-section of the auxiliary wheel 41 is circular, the outer diameter of the auxiliary wheel 41 can be selected based on the final size of the winding core 30. For example, the outer diameter of the auxiliary wheel 41 can be selected to be less than or equal to the final diameter of the winding core 30 to reduce the impact of the pressing force on the winding core 30 and the winding mandrel 20, improving the yield rate of the winding core 30, and extending the service life of the winding mandrel 20.

In an embodiment of this application, the outer peripheral surface of the auxiliary wheel 41 is made of a flexible material.

Optionally, the flexible material may be rubber, carbon fiber, or the like, which has good wear resistance and surface smoothness, and can have a certain elasticity and flexibility. The auxiliary wheel 41 with a flexible material can reduce surface roughness and hardness, improve smoothness, avoid scratching or damaging the surface of the winding core 30 or causing wrinkles in the electrode plate 11 and the separator 13, and enhance the protection of the winding core 30 to improve the yield rate of the winding core 30. The outer peripheral surface of the auxiliary wheel 41 may be integrally formed with the internal structure of the auxiliary wheel 41. For example, the auxiliary wheel 41 is a rubber wheel, or only the outer peripheral side of the auxiliary wheel 41 is wrapped with a rubber layer, which is not limited herein.

Still referring to FIG. 1, in an embodiment of this application, the auxiliary wheel 41 is disposed at a position at which the electrode plate 11 and the separator 13 are wound onto the winding mandrel 20.

At the position at which the electrode plate 11 and the separator 13 are about to be wound onto the winding mandrel 20, the electrode plate 11 and the separator 13 have relatively greater freedom compared to the electrode plate 11 and the separator 13 of the winding core 30 at other positions. To enhance the tension adjustment effect of the auxiliary wheel 41, disposing the auxiliary wheel 41 at this position can reduce the tension of the electrode plate 11 and the separator 13 through friction with the electrode plate 11 and the separator 13 at this position, making the improvement effect more pronounced and saving energy. In addition, for the subsequent increase in outer turn tension, pressing and tightening can be performed from the initial position, further shortening the length of the scattered electrode plate 11 and improving the effect of adjusting the interlayer gap. Here, disposing the auxiliary wheel 41 close to the position for entry into winding can improve the efficiency and likelihood of tension relief on the electrode plate 11 and the separator 13.

Still referring to FIG. 1 and FIG. 2, in an embodiment of this application, the auxiliary wheel mechanism 40 further includes a pressure sensor 44, the pressure sensor 44 being disposed on the auxiliary wheel 41 and electrically connected to the second drive member 42 to sense the pressure with which the auxiliary wheel 41 presses against the winding core 30 and provide feedback to the second drive member 42;
and/or, the auxiliary wheel mechanism 40 further includes a displacement sensor 45, the displacement sensor 45 being disposed on one side of the auxiliary wheel 41 and electrically connected to the second drive member 42 to detect a displacement distance of the auxiliary wheel 41 in the direction of moving closer to or away from the winding core 30.

Optionally, the pressure sensor 44 can be piezoelectric, resistive, capacitive, or other types, which is not limited herein. To make the pressing force of the auxiliary wheel 41 against the winding core 30 more accurate, the pressure sensor 44 is provided to enable real-time detection of the pressing force between the auxiliary wheel 41 and the winding core 30, so that when the pressure is too high, the second drive member 42 can be controlled promptly to operate, causing the first drive member 43 to drive the auxiliary wheel 41 to move away from the winding core 30, preventing deformation of the winding core 30. The optimal pressing force can also be determined through multiple windings, thereby improving the efficiency and consistency of the winding gap for subsequent winding processes. Here, the pressure sensor 44 is disposed on the surface of the auxiliary wheel 41. For example, when a cladding layer of flexible material is provided on the outer peripheral surface of the auxiliary wheel 41, the pressure sensor can be located on the inner side of the cladding layer to reduce the impact of the pressure sensor 44 on the winding core 30. In other embodiments, a controller is further included, and both the pressure sensor 44 and the second drive member 42 are electrically connected to the controller, enabling the controller to coordinate their operation.

Here, the pressure sensor 44 can be provided to detect the pressure applied to the electrode plate 11 and the separator 13, thereby more precisely controlling the drive of the second drive member 42 to enhance the effect of adjusting the interlayer gap of the winding core 30 and improving the yield rate of the winding core 30.

Based on the presence or absence of the pressure sensor 44, the auxiliary wheel mechanism 40 further includes a displacement sensor 45. The displacement sensor 45 is not limited in type and is disposed on one side of the auxiliary wheel 41 or one side of the first drive member 43 to detect a displacement distance of the auxiliary wheel 41 or the drive shaft in real-time. Thus, based on the provision of the displacement sensor 45, the first drive member 43 is cooperatively controlled to improve the precision and efficiency of driving the auxiliary wheel 41.

When both the pressure sensor 44 and the displacement sensor 45 are present, a closed-loop detection of both can further improve the precise control of the position of the auxiliary wheel 41.

In one example, an auxiliary wheel 41 is installed on the right side of the winding mandrel 20, and its rotation is controlled by a motor, while a pneumatic cylinder is used to control the motor to move closer to or away from the winding mandrel 20. A cladding layer of carbon fiber material is provided on the outer side of the auxiliary wheel 41. When the winding core 30 starts winding for 1/3 turn, the auxiliary wheel 41 is driven by the pneumatic cylinder to press against the periphery of the winding core 30 and then actively rotates. As multiple electrode plates 11 and separators 13 are wound, the rotation of the auxiliary wheel 41 offsets a portion of the tension, reducing the tension torque and addressing the issue of excessively small interlayer gaps between the inner turns being pressed too tightly. In this case, the contact pressure between the auxiliary wheel 41 and the winding core 30 is controlled to be approximately 0 N. When the winding core 30 is wound to the outermost 1/3 turn, the pneumatic cylinder can be used to push the auxiliary wheel 41 to apply a specific positive pressure to the winding core 30 slowly, compacting the electrode plate 11 and the separator 13, reducing the interlayer gaps between the outer turns until the winding core 30 is completely wound. Thereafter, the auxiliary wheel 41 retracts, and the winding core 30 is discharged.

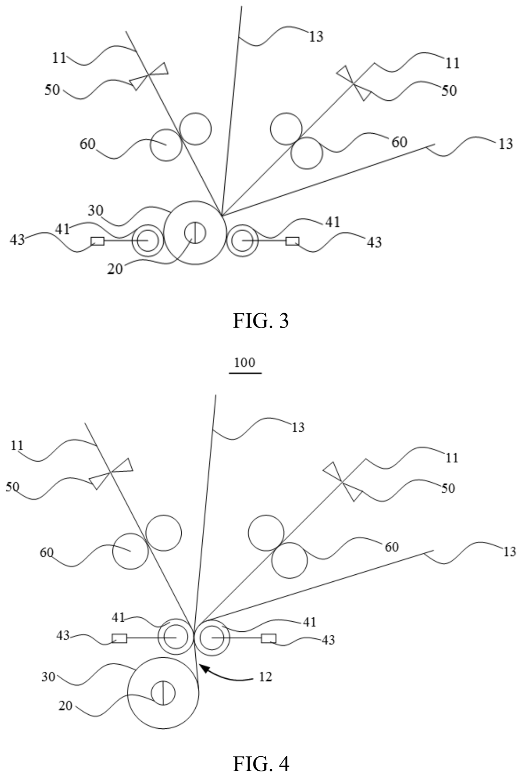

Referring to FIG. 3, in an embodiment of this application, at least two auxiliary wheel mechanisms 40 are provided, the at least two auxiliary wheel mechanisms 40 being spaced apart on the periphery of the winding core 30.

At least two auxiliary wheel mechanism 40 are provided, such as two, three, or more, which can be selected based on the size of the winding mandrel 20. At least two auxiliary wheels 41 are spaced apart along the circumferential direction of the winding core 30, and the tension adjustment strength can be enhanced by increasing the number of auxiliary wheels, further adjusting the interlayer gaps.

In one example, two auxiliary wheel mechanisms 40 are provided, the two auxiliary wheel mechanisms 40 being symmetrically disposed on the periphery of the winding core 30.

The two auxiliary wheel mechanisms 40 are symmetrically disposed on the periphery of the winding core 30, providing symmetrical pressing force to the winding core 30 and effectively reducing deformation. In one example, the two auxiliary wheels 41 may be on a same radial line of the winding core 30, where one auxiliary wheel 41 is disposed at a position at which the electrode plate 11 and the separator 13 just enter the winding mandrel 20 and is configured to offset the tension of the electrode plate 11 and the separator 13, and the other auxiliary wheel 41 is configured to apply an equivalent pressing force to the cell and assist in offsetting the wheel speed difference of the auxiliary wheel 41 near the winding entry point, preventing redundant wrinkling of the electrode plate 11 and the separator 13 during winding due to excessive rotation speed of the auxiliary wheel 41. When excessive pressure applied by the auxiliary wheel 41 near the winding entry point is detected and even causes deformation of the winding mandrel 20, the pressure sensor 44 of the other auxiliary wheel 41 can immediately provide feedback, then the feed amount of the auxiliary wheel can be reduced, or the other auxiliary wheel 41 can apply a specific amount of pressure to counteract the deformation of the winding mandrel 20, thereby further improving the yield rate of the winding core 30 and the adjustment of the interlayer gaps.

Thus, the provision of two auxiliary wheel mechanisms 40 can further enhance the effect of adjusting the interlayer gap of the winding core 30, further reducing the difference in interlayer gaps between the inner and outer turns.

Referring to FIG. 4, in an embodiment of this application, the auxiliary wheel mechanism 40 includes at least two auxiliary wheels 41, two of the auxiliary wheels 41 sandwiching the electrode plate 11, and the second drive member 42 is configured to drive at least one of the two auxiliary wheels 41 to rotate in a same direction as a feeding direction of the electrode plate 11.

Here, the first drive member 43 drives the auxiliary wheel 41 to move in a direction perpendicular to a line connecting the two auxiliary wheels 41 to adaptively accommodate the increasing diameter of the winding core 30. With the auxiliary wheel mechanism 40 being disposed between the winding mandrel 20 and the cutter 50, that is, on a side of the electrode plate 11 that has not yet been wound onto the winding mandrel 20, the active rotation of the auxiliary wheel 41 can drive the electrode plate 11 to wind at a specific speed, thereby relieving the tension of the electrode plate 11 in entering the winding mandrel 20 during winding of the inner turns and providing a specific clamping force to the electrode plate 11 during winding of the outer turns, so that a certain tension is maintained during winding onto the winding mandrel 20, reducing the interlayer gaps between the outer turns. In one example, two auxiliary wheels 41 can rotate simultaneously, with the side pressing against the electrode plate 11 rotating in the same direction as the feeding direction of the electrode plate 11, meaning that the rotation directions of the two auxiliary wheels 41 are opposite. In other examples, only one of the two auxiliary wheels 41 may actively rotate.

In one example, two auxiliary wheels 41 are configured to simultaneously sandwich the electrode plate 11 and the separator 13, and the second drive member 42 is configured to drive at least one of the two auxiliary wheels 41 to rotate in a same direction as a feeding direction of the electrode plate 11.

The two auxiliary wheels 41 apply pressure to the electrode plate 11 and the separator 13 to form a laminated assembly 12, which is then wound. Two separators 13 and two electrode plates 11 are first pre-pressed and laminated to form a laminated assembly 12, then the auxiliary wheel 41 is driven to actively rotate relative to the laminated assembly 12. This can simplify the structure, further reduce the initial tension of the two electrode plates 11, and provide a specific clamping force after the electrode plate 11 is cut, making winding more convenient and improving the winding effect of the winding core.

In another example, the first drive member 43 drives the auxiliary wheel 41 to move in a direction perpendicular to the feeding direction of the electrode plate 11; where a point at which the electrode plate 11 contacts the periphery of the winding core 30 is set as a tangent point, and a line connecting the tangent point and a center of the winding mandrel 20 is perpendicular to a surface of the electrode plate 11.

Through the cooperation of the two auxiliary wheel mechanisms 40, the perpendicular arrangement between the surface of the laminated assembly 12 and the line connecting the tangent point and the center of the winding core 30 is maintained, so that the pressure applied to the winding core 30 due to the angle between the electrode plate 11 and/or the separator 13 and the winding entry point of the winding mandrel 20 can be reduced, thereby further relieving the tension of the electrode plate 11, increasing the interlayer gaps between the inner turns, and providing a specific clamping force after the electrode plate 11 is cut. This thus reducing the lengths of the free head and tail segments, reducing the interlayer gaps between the outer turns, and mitigating the issue of poor tail suspension of the winding core.

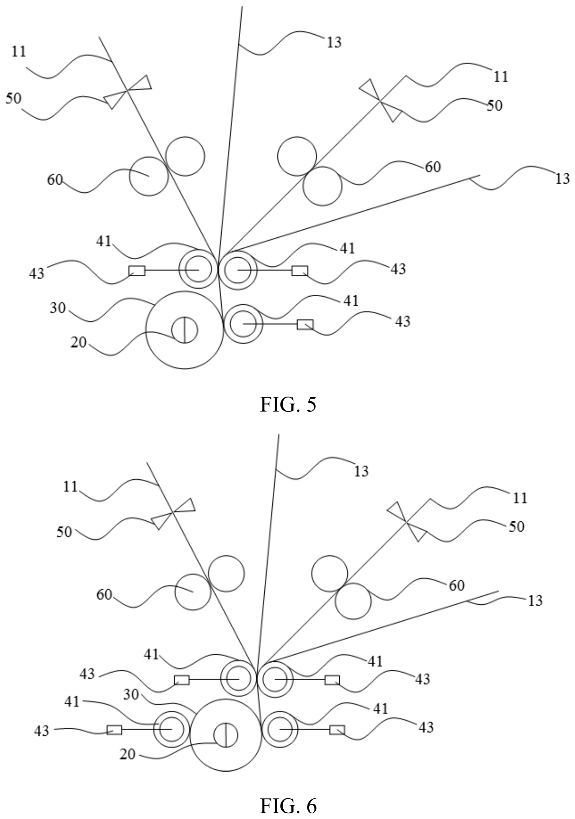

Referring to FIG. 5, through the cooperation of three auxiliary wheel mechanisms 40, two of which sandwich the electrode plate 11 and the separator 13 to form a laminated assembly 12, and the remaining one is disposed on the outer side of winding core 30, so that the tension of the electrode plate 11 and the separator 13 can be relieved before and during winding, thereby further relieving the tension of the electrode plate 11 and the separator 13, further increasing the interlayer gaps between the inner turns. In addition, after the electrode plate 11 and the separator 13 are cut, a higher clamping force at more positions can be provided, further reducing the lengths of the free head and tail segments, further reducing the interlayer gaps between the outer turns, and mitigating the issue of poor tail suspension of the winding core 30.

Referring to FIG. 6, in another example, for a winding core 30 with a longer width and thicker electrode plate 11 and separator 13, to further enhance the tension relief effect, four auxiliary wheel mechanisms 40 are used in cooperation, two of which sandwich the electrode plate 11 and the separator 13 to form a laminated assembly 12, and the other two are disposed on the outer side of the winding core 30, thereby further increasing the interlayer gaps between the inner turns, further reducing the interlayer gaps between the outer turns, making the gaps between the two electrode plates 11 and separators 13 at various positions of the winding core 30 consistent, and improving the performance of the winding core 30.

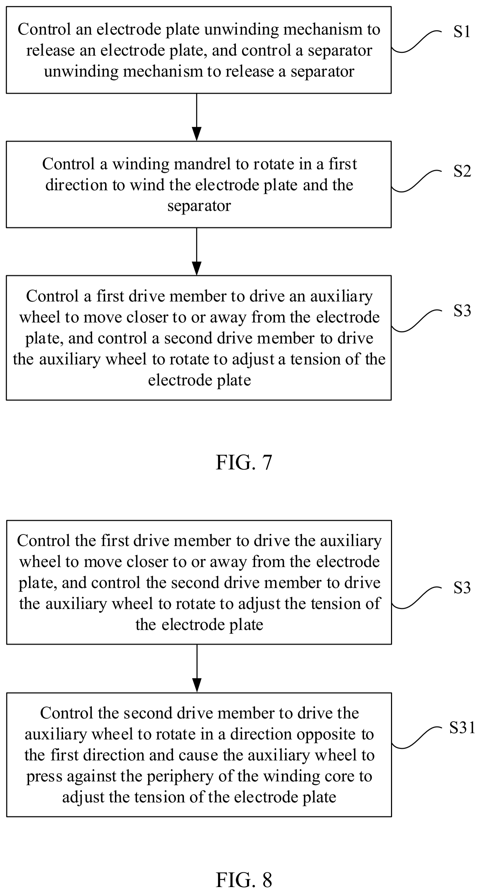

Referring to FIG. 7, this application also proposes a winding method of a winding system 100. The winding system 100 includes an electrode plate unwinding mechanism, a separator unwinding mechanism, a winding mandrel 20, a cutter 50, and an auxiliary wheel mechanism 40, the auxiliary wheel mechanism 40 including an auxiliary wheel 41, a first drive member 43, and a second drive member 42. The winding method includes the steps:
step S1: controlling the electrode plate unwinding mechanism to release the electrode plate 11, and controlling the separator unwinding mechanism to release the separator 13;
step S2: controlling the winding mandrel 20 to rotate in a first direction to wind the electrode plate 11 and the separator 13; and
step S3: controlling the first drive member 43 to drive the auxiliary wheel 41 to move closer to or away from the electrode plate 11, and controlling the second drive member 42 to drive the auxiliary wheel 41 to rotate to adjust the tension of the electrode plate 11.

In step S1 and step S2, the rotation of the winding mandrel 20 achieves the release and winding of the electrode plate 11 and the separator 13, and the electrode plate 11 and the separator 13 are wound around the winding mandrel 20 to form the winding core 30. Here, materials of the electrode plate 11 and the separator 13 are not limited, and the structural configuration of the winding mandrel 20 may be implemented with reference to the settings described in the above embodiments. In step S3, an auxiliary wheel mechanism 40 is disposed on the side of the electrode plate 11, where the auxiliary wheel 41 of the auxiliary wheel mechanism 40 presses against the electrode plate 11 during the winding process and, when being driven by the second drive member 42, can actively rotate relative to the electrode plate 11 to adjust the tension of the electrode plate 11, thereby controlling the interlayer gaps of the winding core 30 to improve the performance of the winding core 30.

Referring to FIG. 8, in an embodiment of this application, the auxiliary wheel 41 is disposed on one side of the winding mandrel 20 and configured to press against the outer side of the winding core 30 and in step S3 of controlling the first drive member 43 to drive the auxiliary wheel 41 to move closer to or away from the electrode plate 11, and controlling the second drive member 42 to drive the auxiliary wheel 41 to rotate to adjust the tension of the electrode plate 11, the method includes the following step.

Step S31: Control the second drive member 42 to drive the auxiliary wheel 41 to rotate in a direction opposite to the first direction, and cause the auxiliary wheel 41 to press against the periphery of the winding core 30 to adjust the tension of the electrode plate 11.

In step S31, the second drive member 42 is controlled to drive the auxiliary wheel 41 to rotate in a direction opposite to the first direction, meaning that the rotation directions on two sides of a contact between the auxiliary wheel 41 and the winding core 30 are opposite to each other. The auxiliary wheel 41 presses against the winding core 30, with a pressing force of 0 N or a specific value. In this winding method, the auxiliary wheel 41 of the auxiliary wheel mechanism 40 is controlled to press against the periphery of the winding core 30 and, when being driven, can actively rotate relative to the winding core 30. By setting the rotation speed and pressing force of the auxiliary wheel 41, at the initial stage of winding, the auxiliary wheel can rotate in a direction opposite to the feeding direction to interrupt the tension of the electrode plate 11 and the separator 13, reducing the pulling and pressing on the electrode plate 11 and the separator 13 by the tension, thereby increasing the interlayer gaps between the inner turns, whereas at the later stage of winding, increased pressing force applied to the winding core 30 serves to compact the electrode plate 11 and the separator 13 in the outer turns and to shorten the length of the free tail segment of the electrode plate 11 and separator 13 after cutting, thereby reducing the winding gap of the outer turns and mitigating the difference in interlayer gaps between the inner and outer turns. This thus mitigates the issues of collapse in inner turns and lithium precipitation in outer turns, improving the performance of the winding core 30.

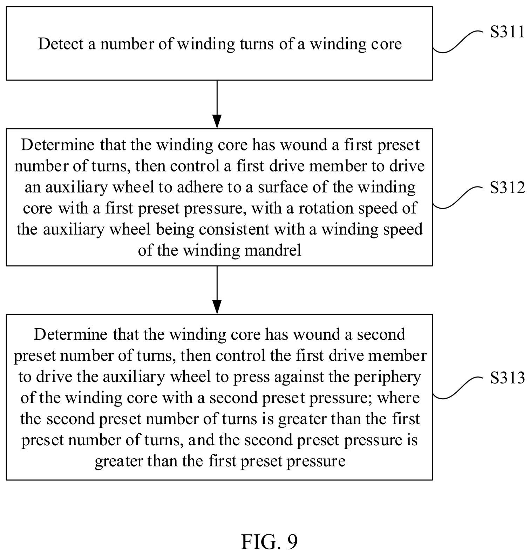

Referring to FIG. 9, in an embodiment of this application, in step S31 of controlling the second drive member 42 to drive the auxiliary wheel 41 to rotate in a direction opposite to the first direction, and causing the auxiliary wheel 41 to press against the periphery of the winding core 30 to adjust the tension of the electrode plate 11, the method includes the following steps.

Step S311: Detect the number of winding turns of the winding core 30.

step S312: Determine that the winding core 30 has wound a first preset number of turns, and control the first drive member 43 to move and drive the auxiliary wheel 41 to adhere to a surface of the electrode plate 11 and the separator 13 of the winding core 30 with a first preset pressure, with a rotation speed of the auxiliary wheel 41 being consistent with a winding speed of the winding mandrel 20.

In step S311, the number of winding turns of the winding core 30 can be obtained by detecting the number of rotations of the winding mandrel 20 through a sensor, which may be a Hall sensor or a photoelectric sensor, and is not limited herein. In step S312, the first preset number of turns is the number of turns at the initial stage of winding, for example, the first preset number of turns may be a proportion of less than one-tenth of a total number of winding turns of the winding core 30. Thus, it is only required that the auxiliary wheel 41 adheres to the surface of the winding core 30, and the value of the first preset pressure is small, for example, 0 N to 1 N, and the rotation speed of the auxiliary wheel 41 is consistent with the winding speed of the winding mandrel 20, providing a specific friction force to reduce the tension of the electrode plate 11 and the separator 13 without pressing the winding core 30 tightly, thereby increasing the interlayer gaps between the inner turns of the winding core 30. Here, by detecting the number of winding turns, it is more convenient to control the rotation speed and displacement position of the second drive member 42. When the first preset number of turns is small, corresponding to the inner turn structure, adhering to the surface of the electrode plate 11 and the separator 13 of the winding core 30 with a small first preset pressure and rotating in the opposite direction can reduce the pulling force on the electrode plate 11 and the separator 13, achieving the effect of increasing the interlayer gaps between the inner turns. In other examples, the operation of the auxiliary wheel mechanism 40 may alternatively be controlled by detecting a time value.

Referring to FIG. 9, in an embodiment of this application, when the winding core 30 has wound a first preset number of turns, after the step S312 of controlling the first drive member 43 to move and drive the auxiliary wheel 41 to adhere to a surface of the electrode plate 11 and the separator 13 of the winding core 30 with a first preset pressure, with a rotation speed of the auxiliary wheel 41 being consistent with a winding speed of the winding mandrel 20, the method further includes the following step.

Step S313: determining that the winding core 30 has wound a second preset number of turns, and controlling the first drive member 43 to drive the auxiliary wheel 41 to press against the periphery of the winding core 30 with a second preset pressure.

The second preset number of turns is greater than the first preset number of turns, and the second preset pressure is greater than the first preset pressure.

In step S313, the second preset number of turns is a larger number of turns, that is, the number of turns near the tail end of the winding core 30. During this process, the electrode plate 11 and the separator 13 are about to be cut or have been cut, the rotation speed of the winding mandrel 20 also decreases, and correspondingly the rotation speed of the auxiliary wheel 41 also reduces, thereby applying a larger pressing force to compact the electrode plate 11 and the separator 13 in the outer turns to reduce the interlayer gaps between the outer turns. The second preset pressure may be set based on the diameter of the winding core 30 and the diameter of the auxiliary wheel 41 to obtain an interlayer gap as close as possible to that between the inner turns without deforming the winding core 30, for example greater than 1 N.

When the second preset number of turns is larger, such as during the final winding stage, the first drive member 43 is controlled to press against the electrode plate 11 and the separator 13 of the winding core 30 with a larger second preset pressure, thereby reducing the interlayer gaps between the outer turns of the winding core 30.

In an embodiment of this application, the first preset number of turns is 1/3 to 1/2 turn, and the second preset number of turns is the final 1/3 to 1/2 turn before completion.

Setting the first preset number of turns to 1/3 to 1/2 turn enables the winding core 30 to adjust the interlayer gap at the initial stage of winding. Intervening at this range of turns can further relieve the tension of the electrode plate 11 and separator 13 in the inner turns, further increasing the interlayer gaps between the inner turns, which is beneficial to improving the consistency with the interlayer gaps between the outer turns. The second preset number of turns ranges from the final 1/3 to 1/2 turn before completion, that is, a final length of the electrode plate 11 and separator 13 wound less than one turn, which can reduce premature intervention of the pressing force on the electrode plate 11 and separator 13. Pressing with increased pressure is performed only after the electrode plate 11 and separator 13 are cut, which can reduce deformation of the winding core 30 and effectively reduce the interlayer gaps between the outer turns, further mitigating the difference in interlayer gaps between the inner and outer turns.

In an embodiment of this application, in the step S313 of controlling the first drive member 43 to move and drive the auxiliary wheel 41 to press against the periphery of the winding core 30 with a second preset pressure when the winding core 30 has wound a second preset number of turns, the method includes the following step.

Step S3131: Control the first drive member 43 to drive the auxiliary wheel 41 to move at a preset speed, such that a pressure pressing against the periphery of the winding core 30 gradually increases from zero to the second preset pressure.

The preset speed in step S3131 may be set based on the diameter of the auxiliary wheel 41 and the diameter of the winding core 30, and should neither be too large nor too small. This preset speed may gradually increase the pressure of the auxiliary wheel 41 pressing against the winding core 30, making the winding process of the winding core 30 more stable and avoiding offset and deformation. In other examples, the first drive member 43 may alternatively be controlled to gradually increase the moving speed from 0 m/s with a small acceleration, so that the second preset pressure gradually increases from 0 N.

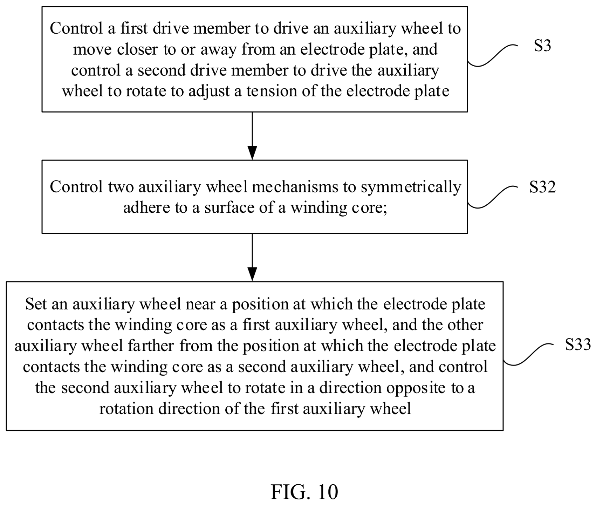

Referring to FIG. 10, in an embodiment of this application, the auxiliary wheel mechanism 40 includes at least two auxiliary wheels 41, and in the step S3 of controlling the second drive member 42 to drive the auxiliary wheel 41 to rotate in a direction opposite to the first direction, and causing the auxiliary wheel 41 to press against the periphery of the winding core 30 to adjust the tension of the electrode plate 11, the method includes the following steps.

Step S32: Control the two auxiliary wheel mechanisms 40 to symmetrically adhere to the electrode plate 11 and the separator 13 on the surface of the winding core 30.

step S33: Set an auxiliary wheel 41 near a position at which the electrode plate 11 contacts the winding core 30 as a first auxiliary wheel and another auxiliary wheel 41 farther from the position at which the electrode plate 11 contacts the winding core 30 as a second auxiliary wheel, and control the second auxiliary wheel to rotate in a direction opposite to a rotation direction of the first auxiliary wheel.

Two auxiliary wheel mechanisms 40 are provided, and two auxiliary wheels 41 are spaced apart along the circumferential direction of the winding core 30, enabling further tension relief through their cooperation. In step S32, at the initial stage of winding the electrode plate 11 and the separator 13, the two auxiliary wheels 41 of the auxiliary wheel mechanism 40 are controlled to simultaneously press against the periphery of the winding core 30, thereby providing symmetrical pressing force to the winding core 30, effectively reducing deformation. In one example, the two auxiliary wheels 41 may be on a same radial line of the winding core 30. In step S33, the first auxiliary wheel 41 is disposed close to the winding core 30 at a winding entry position of the electrode plate 11 and the separator 13, and the second auxiliary wheel 41 is controlled to rotate in a direction opposite to that of the first auxiliary wheel 41, to offset the winding tension of the electrode plate 11 and the separator 13 and increase the interlayer gaps between the inner turns. The second auxiliary wheel 41 is configured to apply an equivalent pressing force to the winding core 30 and assist in offsetting the wheel speed difference of the first auxiliary wheel 41, preventing redundant wrinkling of the electrode plate 11 and the separator 13 due to excessive rotation speed of the first auxiliary wheel 41.

The provision of two auxiliary wheel mechanisms 40 can enhance the stability of pressing against the winding core 30, effectively preventing deformation of the winding core 30. In addition, the reverse rotation of the second auxiliary wheel 41 can offset some redundant wrinkling of the electrode plate 11 and the separator 13 on the side in contact with the winding core 30, improving the winding effect.

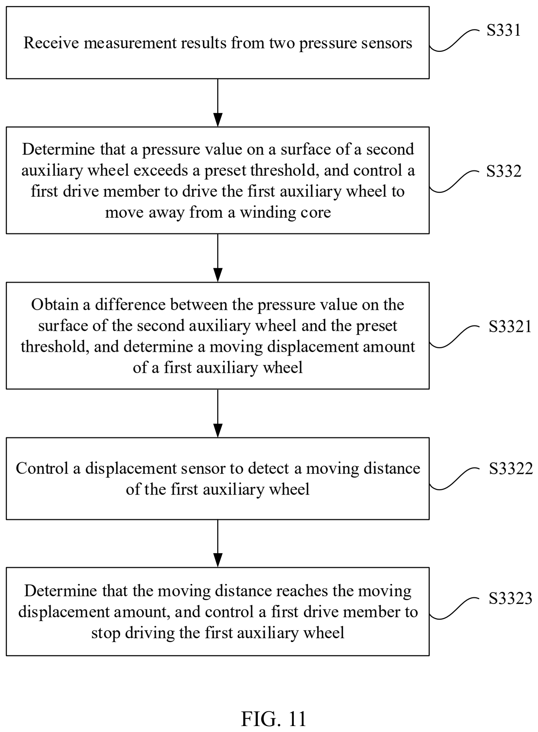

Referring to FIG. 11, in an embodiment of this application, the winding system 100 further includes two pressure sensors 44, the two pressure sensors 44 being disposed on the two auxiliary wheels 41.

In step S33 of setting an auxiliary wheel 41 near a position at which the electrode plate 11 contacts the winding core 30 as a first auxiliary wheel and another auxiliary wheel 41 farther from the position at which the electrode plate 11 contacts the winding core 30 as a second auxiliary wheel, and controlling the second auxiliary wheel to rotate in a direction opposite to a rotation direction of the first auxiliary wheel, the method includes the following steps.

Step S331: Receive measurement results from the two pressure sensors 44.

Step S332: Control the first drive member 43 to drive the first auxiliary wheel to move away from the winding core 30 when a pressure value on a surface of the second auxiliary wheel 41 exceeds a preset threshold.

When pressure sensors 44 are provided, the two pressure sensors 44 can detect the pressing force between the two auxiliary wheels 41 and the winding core 30 in real-time. The controller can receive the measurement results from the two pressure sensors 44 in real-time and set preset thresholds for the two auxiliary wheels 41. When it is determined that a pressure value of the pressure sensor 44 of the second auxiliary wheel 41 exceeds the preset threshold, indicating that the pressure of the first auxiliary wheel 41 is also too high, the feed amount of the first auxiliary wheel 41 is reduced in this case, that is, moving away from the winding core 30, which can avoid deformation of the winding mandrel 20, further improving the yield rate of the winding core 30. Here, the provision of the pressure sensors 44 can effectively reduce deformation of the winding core 30. In other embodiments, a pressure sensor 44 may be provided on at least one of the auxiliary wheels 41.

Referring to FIG. 11, in an embodiment of this application, the winding system 100 further includes a displacement sensor 45, the displacement sensor 45 being disposed on one side of the first auxiliary wheel 41.

In the step S332 of controlling the first drive member 43 to drive the first auxiliary wheel to move away from the winding core 30 when a pressure value on a surface of the second auxiliary wheel 41 exceeds a preset threshold, the method includes the following steps.

Step S3321: Obtain a difference between the pressure value on the surface of the second auxiliary wheel 41 and the preset threshold, and determine a moving displacement amount of the first auxiliary wheel 41.

step S3322: Control the displacement sensor 45 to detect a moving distance of the first auxiliary wheel 41.

step S3323: Control the first drive member 43 to stop driving the first auxiliary wheel when the moving distance reaches the moving displacement amount.

To improve control efficiency and precision, a displacement sensor 45 is provided. First, upon obtaining the pressure value on the surface of the second auxiliary wheel 41, the difference from the preset threshold is calculated, and this difference is converted into a moving displacement amount of the first auxiliary wheel 41. The conversion method may be using a lookup table of pressure differences and moving displacement amounts pre-stored in the controller or a formula to convert the pressure difference into the moving displacement amount, which is not limited herein. Then, the first drive member 43 is controlled to drive the first auxiliary wheel 41 to move away from the winding core 30, while the displacement sensor 45 is controlled to detect a moving distance of the first auxiliary wheel 41 in real-time. Finally, when it is detected that the moving distance of the first auxiliary wheel 41 reaches the moving displacement amount, a signal is sent to the controller, causing the controller to control the first drive member 43 to stop driving the first auxiliary wheel 41, thereby reaching the desired moving position. Here, the displacement sensor 45 can be provided to enable closed-loop control with the first drive member 43, improving the control precision of the first drive member 43 and enhancing winding efficiency.

In an embodiment of this application, the auxiliary wheel mechanism 40 includes at least two auxiliary wheels 41, the two auxiliary wheels 41 being configured to sandwich the electrode plate 11. In the step S3 of controlling the second drive member 42 to drive the auxiliary wheel 41 to rotate in a direction opposite to the first direction, and causing the auxiliary wheel 41 to press against the periphery of the winding core 30 to adjust the tension of the electrode plate 11, the method includes the following step.

Step S34: Control the second drive member 42 to drive the two auxiliary wheels 41 to rotate in a same direction as a feeding direction of the electrode plate 11 to adjust the tension of the electrode plate 11.

In this step, the first drive member 43 drives the auxiliary wheel 41 to move in a direction perpendicular to a line connecting the two auxiliary wheels 41 to adaptively accommodate the increasing diameter of the winding core 30. With the auxiliary wheel mechanism 40 being disposed between the winding mandrel 20 and the cutter 50, that is, on a side of the electrode plate 11 that has not yet been wound onto the winding mandrel 20, the active rotation of the auxiliary wheel 41 can drive the electrode plate 11 to wind at a specific speed, thereby relieving the tension of the electrode plate 11 in entering the winding mandrel 20 and increasing the interlayer gaps between the inner turns during winding of the inner turns, and providing a specific clamping force to the electrode plate 11 during winding of the outer turns, so that a certain tension is maintained during winding onto the winding mandrel 20, reducing the interlayer gaps between the outer turns, thereby improving the winding effect. In one example, two auxiliary wheels 41 can rotate simultaneously, with the side pressing against the electrode plate 11 rotating in the same direction as the feeding direction of the electrode plate 11, meaning that the rotation directions of the two auxiliary wheels 41 are opposite. In other examples, only one of the two auxiliary wheels 41 may actively rotate.

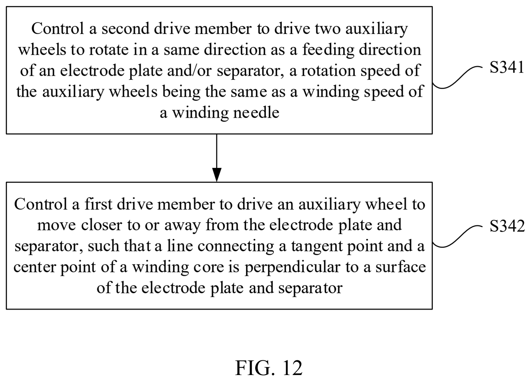

Referring to FIG. 12, in one example, two auxiliary wheels 41 are configured to simultaneously sandwich two electrode plates 11 and two separators 13, and in the step S34 of controlling the second drive member 42 to drive the two auxiliary wheels 41 to rotate in a same direction as a feeding direction of the electrode plate 11 to adjust the tension of the electrode plate 11, the method includes the following step.

Step S341: Control the second drive member 42 to drive the two auxiliary wheels 41 to rotate in the same direction as the feeding direction of the electrode plate 11 and/or the separator 13, with a rotation speed of the auxiliary wheel 41 being the same as a winding speed of the winding mandrel 20.

In this step, the two auxiliary wheels 41 apply pressure to the electrode plate 11 and the separator 13 to form a laminated assembly 12, which is then wound. Two separators 13 and the two electrode plates 11 are first pre-pressed and laminated to form a laminated assembly 12, and the auxiliary wheel 41 is driven to actively rotate, with a rotating direction on the side near the electrode plate 11 and the separator 13 being the same as the feeding direction of the electrode plate 11 and the separator 13. This means that the auxiliary wheel can assist in the feeding of the electrode plate 11 and the separator 13 so that the pulling force of the winding mandrel 20 on the electrode plate 11 and the separator 13 can be reduced, improving the feeding effect of the electrode plate 11 and the separator 13. The rotation speed is the same as the winding speed of the winding mandrel 20 to prevent redundant wrinkling of the electrode plate 11 and the separator 13. Driving the auxiliary wheel 41 to actively rotate relative to the laminated assembly 12 can simplify the structure, further reduce the initial tension of the two electrode plates 11, and provide a certain clamping force after the electrode plate 11 is cut, making winding more convenient and improving the winding effect of the winding core.

Referring to FIG. 12, in another example, a point at which the electrode plate 11 and the separator 13 contact the periphery of the winding core 30 is set as a tangent point, and after the step S341 of controlling the second drive member 42 to drive the two auxiliary wheels 41 to rotate in a same direction as a feeding direction of the electrode plate 11 and/or the separator 13, with a rotation speed of the auxiliary wheel 41 being the same as a winding speed of the winding mandrel 20, the method includes the following step.

Step S342: Control the first drive member to drive the auxiliary wheel to move closer to or away from the electrode plate and the separator, such that a line connecting a tangent point and a center of the winding core is perpendicular to the surface of the electrode plate and the separator.

In this step, through the cooperation of the two auxiliary wheel mechanisms 40, the perpendicular arrangement between the surface of the laminated assembly 12 and the line connecting the tangent point and the center of the winding core 30 is maintained, so that the pressure applied to the winding core 30 due to the angle between the electrode plate 11 and/or the separator 13 and the winding entry point of the winding mandrel 20 can be reduced, thereby further relieving the tension of the electrode plate 11, increasing the interlayer gaps between the inner turns, and providing a specific clamping force after the electrode plate 11 is cut. This thus reduces the lengths of the free head and tail segments, reducing the interlayer gaps between the outer turns, and mitigating the issue of poor tail suspension of the winding core.

In an optional example, for battery cells with a longer width and thicker electrode plate 11 and separator 13, to further enhance the tension relief effect, three auxiliary wheel mechanisms 40 are used in cooperation, two of which sandwich the electrode plate 11 and the separator 13 to form a laminated assembly 12, and the remaining one is disposed on the outer side of the winding core 30, so that multiple electrode plates 11 and separators 13 are first combined to form a laminated assembly 12, and then, the angle between the surface of the laminated assembly 12 and a line connecting the winding entry point with the center of the winding core 30 is controlled. This can further reduce the pressure applied to the winding core 30 due to the angle between the electrode plate 11 and the separator 13 and the winding entry point of the winding mandrel 20, thereby further relieving the tension of the electrode plate 11 and the separator 13, further increasing the interlayer gaps between the inner turns, and providing a specific clamping force after the electrode plate 11 and the separator 13 is cut. This thus reduces the lengths of the free head and tail segments, further reducing the interlayer gaps between the outer turns, mitigating the issue of poor tail suspension of the winding core 30, and enhancing the uniformity of the interlayer gap of the winding core 30.

The above are only preferred embodiments of this application and do not limit the patent scope of this application. Any equivalent structural transformations made under the concept of this application using the contents of the specification and drawings of this application, or direct/indirect applications in other related technical fields, are included in the patent protection scope of this application.

## Claims

1. A winding system configured to wind an electrode plate and a separator to form a winding core, wherein the winding system comprises:
an electrode plate unwinding mechanism configured to unwind an electrode plate;
a separator unwinding mechanism configured to unwind a separator;
a winding mandrel configured to wind the electrode plate and the separator to form a winding core;
a cutter configured to cut the electrode plate, the cutter being arranged upstream of the winding mandrel; and
an auxiliary wheel mechanism arranged downstream of the cutter, wherein the auxiliary wheel mechanism comprises an auxiliary wheel, a first drive member, and a second drive member, the first drive member is configured to drive the auxiliary wheel to move closer to or away from the electrode plate, the second drive member is configured to drive the auxiliary wheel to rotate to adjust the tension of the electrode plate.

2. The winding system according to claim 1, wherein the auxiliary wheel is disposed on one side of the winding mandrel, the auxiliary wheel is configured to press against an outer side of the winding core, and the second drive member is configured to drive the auxiliary wheel to rotate in a direction opposite to a winding direction of the winding mandrel to adjust the tension of the electrode plate.

3. The winding system according to claim 2, wherein an axial length of the auxiliary wheel is greater than or equal to an axial length of the winding mandrel.

4. The winding system according to claim 2, wherein an outer peripheral surface of the auxiliary wheel is made of a flexible material.

5. The winding system according to any one of claims 2 to 4, wherein the auxiliary wheel is disposed at a position at which the electrode plate is wound onto the winding mandrel.

6. The winding system according to any one of claims 2 to 4, wherein the auxiliary wheel mechanism further comprises a pressure sensor disposed on the auxiliary wheel and electrically connected to the first drive member;
and/or, the auxiliary wheel mechanism further comprises a displacement sensor, the displacement sensor being disposed on one side of the auxiliary wheel and electrically connected to the first drive member.

7. The winding system according to any one of claims 2 to 4, wherein at least two auxiliary wheel mechanisms are provided, the at least two auxiliary wheel mechanisms being spaced apart on the periphery of the winding mandrel.

8. The winding system according to claim 7, wherein two auxiliary wheel mechanisms are provided, the two auxiliary wheel mechanisms being symmetrically disposed on the periphery of the winding mandrel.

9. The winding system according to any one of claims 1 to 4, wherein the auxiliary wheel mechanism comprises at least two auxiliary wheels, two of the auxiliary wheels sandwiching the electrode plate, and the second drive member being configured to drive at least one of the two auxiliary wheels to rotate in a same direction as a feeding direction of the electrode plate.

10. The winding system according to claim 9, wherein the two auxiliary wheels are configured to simultaneously sandwich the electrode plate and the separator, and the second drive member is configured to drive at least one of the two auxiliary wheels to rotate in the same direction as the feeding direction of the electrode plate.

11. The winding system according to claim 10, wherein the first drive member drives the auxiliary wheel to move in a direction perpendicular to the feeding direction of the electrode plate;
wherein a point at which the electrode plate contacts the periphery of the winding core is set as a tangent point, and a line connecting the tangent point and a center of the winding mandrel is perpendicular to a surface of the electrode plate.

12. A winding method of a winding system, wherein the winding system comprises an electrode plate unwinding mechanism, a separator unwinding mechanism, a winding mandrel, a cutter, and an auxiliary wheel mechanism, the auxiliary wheel mechanism comprises an auxiliary wheel, a first drive member, and a second drive member, and the winding method comprises:
controlling the electrode plate unwinding mechanism to release an electrode plate, and controlling the separator unwinding mechanism to release a separator;
controlling the winding mandrel to rotate in a first direction to wind the electrode plate and the separator to form a winding core; and
controlling the first drive member to drive the auxiliary wheel to move closer to or away from the electrode plate, and controlling the second drive member to drive the auxiliary wheel to rotate to adjust the tension of the electrode plate.

13. The winding method of the winding system according to claim 12, wherein the auxiliary wheel is disposed on one side of the winding mandrel and configured to press against an outer side of the winding core, and in the step of controlling the first drive member to drive the auxiliary wheel to move closer to or away from the electrode plate, and controlling the second drive member to drive the auxiliary wheel to rotate to adjust the tension of the electrode plate, the method comprises:
controlling the second drive member to drive the auxiliary wheel to rotate in a direction opposite to the first direction, and causing the auxiliary wheel to press against the periphery of the winding core to adjust the tension of the electrode plate.

14. The winding method of the winding system according to claim 13, wherein in the step of controlling the second drive member to drive the auxiliary wheel to rotate in a direction opposite to the first direction, and causing the auxiliary wheel to press against the periphery of the winding core to adjust the tension of the electrode plate, the method comprises:
detecting the number of winding turns of the winding core; and
determining that the winding core has wound a first preset number of turns, and controlling the first drive member to drive the auxiliary wheel to adhere to the surface of the winding core with a first preset pressure, with a rotation speed of the auxiliary wheel being consistent with a winding speed of the winding mandrel.

15. The winding method of the winding system according to claim 14, wherein after the step of determining that the winding core has wound a first preset number of turns, and controlling the first drive member to drive the auxiliary wheel to adhere to the surface of the winding core with a first preset pressure, with a rotation speed of the auxiliary wheel being consistent with a winding speed of the winding mandrel, the method further comprises:
determining that the winding core has wound a second preset number of turns, and controlling the first drive member to drive the auxiliary wheel to press against the periphery of the winding core with a second preset pressure;
wherein the second preset number of turns is greater than the first preset number of turns, and the second preset pressure is greater than the first preset pressure.

16. The winding method of the winding system according to claim 15, wherein the first preset number of turns is 1/3 to 1/2 turn, and the second preset number of turns is the final 1/3 to 1/2 turn before completion.

17. The winding method of the winding system according to claim 15, wherein in the step of determining that the winding core has wound a second preset number of turns, and controlling the first drive member to drive the auxiliary wheel to press against the periphery of the winding core with a second preset pressure, the method comprises:
controlling the first drive member to drive the auxiliary wheel to move at a preset speed, such that a pressure pressing against the periphery of the winding core gradually increases from zero to the second preset pressure.

18. The winding method of the winding system according to any one of claims 12 to 17, wherein at least two auxiliary wheel mechanisms are provided, and in the step of controlling the first drive member to drive the auxiliary wheel to move closer to or away from the electrode plate, and controlling the second drive member to drive the auxiliary wheel to rotate to adjust the tension of the electrode plate, the method comprises:
controlling the two auxiliary wheel mechanisms to symmetrically adhere to the winding core;
setting an auxiliary wheel near a position at which the electrode plate contacts the winding core as a first auxiliary wheel and another auxiliary wheel farther from the position at which the electrode plate contacts the winding core as a second auxiliary wheel, and controlling the second auxiliary wheel to rotate in a direction opposite to a rotation direction of the first auxiliary wheel.

19. The winding method of the winding system according to claim 18, wherein the winding system further comprises two pressure sensors, the two pressure sensors being respectively disposed on the two auxiliary wheels;
in the step of setting an auxiliary wheel near a position at which the electrode plate contacts the winding core as a first auxiliary wheel and another auxiliary wheel farther from the position at which the electrode plate contacts the winding core as a second auxiliary wheel, and controlling the second auxiliary wheel to rotate in a direction opposite to the rotation direction of the first auxiliary wheel, the method comprises:
receiving measurement results from the two pressure sensors; and
determining that a pressure value on a surface of the second auxiliary wheel exceeds a preset threshold, and controlling the first drive member to drive the first auxiliary wheel to move away from the winding core.

20. The winding method of the winding system according to claim 19, wherein the winding system further comprises a displacement sensor, the displacement sensor being disposed on one side of the first auxiliary wheel; and
in the step of determining that a pressure value on a surface of the second auxiliary wheel exceeds a preset threshold, and controlling the first drive member to drive the first auxiliary wheel to move away from the winding core, the method comprises:
obtaining a difference between the pressure value on the surface of the second auxiliary wheel and the preset threshold, and determining a moving displacement amount of the first auxiliary wheel;
controlling the displacement sensor to detect a moving distance of the first auxiliary wheel; and
determining that the moving distance reaches the moving displacement amount, and controlling the first drive member to stop driving the first auxiliary wheel.

21. The winding method of the winding system according to any one of claims 12 to 17, wherein at least two auxiliary wheels are provided, the at least two auxiliary wheels being configured to sandwich the electrode plate, and in the step of controlling the first drive member to drive the auxiliary wheel to move closer to or away from the electrode plate, and controlling the second drive member to drive the auxiliary wheel to rotate to adjust the tension of the electrode plate, the method comprises:
controlling the second drive member to drive the two auxiliary wheels to rotate in a same direction as a feeding direction of the electrode plate to adjust the tension of the electrode plate.

22. The winding method of the winding system according to claim 21, wherein two auxiliary wheels are configured to simultaneously sandwich two electrode plates and two separators, and in the step of controlling the second drive member to drive the two auxiliary wheels to rotate in a same direction as a feeding direction of the electrode plate to adjust the tension of the electrode plate, the method comprises:
controlling the second drive member to drive the two auxiliary wheels to rotate in the same direction as the feeding direction of the electrode plate and/or separator, with a rotation speed of the auxiliary wheels being the same as a winding speed of the winding mandrel.

23. The winding method of the winding system according to claim 22, wherein a point where the electrode plate and the separator contact the periphery of the winding core is set as a tangent point, and after the step of controlling the second drive member to drive the two auxiliary wheels to rotate in the same direction as the feeding direction of the electrode plate and/or separator, with a rotation speed of the auxiliary wheels being the same as a winding speed of the winding mandrel, the method further comprises:
controlling the first drive member to drive the auxiliary wheel to move closer to or away from the electrode plate and separator, such that a line connecting a tangent point and a center of the winding core is perpendicular to a surface formed by lamination of the electrode plate and the separator.
